# EUROPEAN PATENT APPLICATION

(11) **EP 4 667 877 A1**
(43) Date of publication of application: **24.12.2025**
(21) Application number: 24183447.2
(22) Date of filing: 20.06.2024
(51) Int. Cl.: G01D 5/30, A46B 15/00

(54) **OPTICAL SENSOR SYSTEM AND POWERED ORAL CLEANING DEVICE**

(71) Applicant: Koninklijke Philips N.V., 5656 AG Eindhoven (NL)
(72) Inventor: MEHENDALE, Aditya, Eindhoven (NL); BLOEMEN, Pascal Jean Henri, Eindhoven (NL); SOLERIO, Daniele, Eindhoven (NL); MULDER, Bernardo Arnoldus, Eindhoven (NL); VUGTS, Marinus Arnoldus Martinus, Eindhoven (NL); DE RUITER, Dirk Jan, Eindhoven (NL); SILVIUS, Johannes Bernardus Hilarius, Eindhoven (NL); HADDEMAN, Theodoor Bastiaan Johannes, Eindhoven (NL); VAN NOORD, Kris, Eindhoven (NL); AELEN, Paul, Eindhoven (NL); LEENEN, Tom Cornelus Pieter Franciscus, Eindhoven (NL)
(74) Representative: Philips Intellectual Property & Standards

(57) **Abstract**

The invention relates to an optical sensor system (1), comprising an active unit (2) and a passive unit (3) that are movable with respect to one another. The active unit (2) has at least one light source (4) and at least one light sensor (5) and the passive unit (3) has a reflector (7) comprising at least one reflector segment (8). When the passive unit (3) is in a default position with respect to the active unit (2), each of the reflector segments (8) has, in a region where it reflects light emitted by a specific one of the at least one light source (4) to a specific one of the at least one light sensor (5) and in a cross section going through the specific one of the at least one light source (4) and the specific one of the at least one light sensor (5), essentially a rounded concave shape. The essentially rounded concave shape makes the optical sensor system (1) tolerant to mechanical misalignment and allows a convenient placement, orientation and use of commonly available light sources and light sensors.

## Description

### FIELD OF THE INVENTION

The invention relates to an optical sensor system. The invention further relates to a powered oral cleaning device that comprises said optical sensor system.

### BACKGROUND OF THE INVENTION

Optical sensors, which may also be called light-based sensors, are used in a wide variety of applications. As they use light to discern certain events or quantities, they afford a contact-less operation, and are able to perform measurements at an arbitrary distance. In such sensors, a modulation of light is effected by the measurand. The light may come from a specifically incorporated light-source and the modulation may be enabled by reflection of the light.

International patent application WO 2017/202913 A1 describes an example where an optical sensor with a light source, a light sensor and a flat or a chevron-shaped reflector is used in a powered toothbrush for measuring the load on the brush-head as well as its excursion, i.e., the periodic movement that results in a brushing action.

### SUMMARY OF THE INVENTION

It is an object of the present invention to further improve the measurements performed by optical sensors.

The object of the present invention is solved by the subject matter of the independent claims, wherein further embodiments are incorporated in the dependent claims.

In an aspect of the present invention, an optical sensor system is provided. Said optical sensor system may be used for load-sensing in a powered toothbrush. Alternatively, the optical sensor system may be used as a sensor for rotating machines, as a sensor, e.g., a roll-stability sensor, in vehicles, in particular in automobiles, as a sensor for wheels, axles, or in human-machine-interface devices such as joysticks, or pointers, for load-sensing in appliances, for a combined, more particularly simultaneous, measurement of multiple degrees of freedom, e.g., in robotics, or as sensor in medical imaging devices.

The optical sensor system comprises an active unit with at least one light source and at least one light sensor. In this context, the at least one light source may be light source emitting visible light, infrared light, or ultraviolet light. In particular, the at least one light source may be at least one light-emitting diode (LED). The at least one light sensor may be any kind of light sensor that measures the intensity of light that is incident on the light sensor, i.e., that hits the light sensor. For example, the at least one light sensor may be at least one photodiode, at least one CMOS sensor or at least one CCD sensor.

The optical sensor system further comprises a passive unit with a reflector that comprises at least one reflector segment. Said at least one reflector segment may face the at least one light source and/or the at least one light sensor. In particular, the at least one light source, the at least one light sensor and the at least one reflector segment may be arranged such that light emitted by one of the at least one light source is reflected by one of the at least one reflector segment and directed to one of the at least one light sensor.

The active unit and the passive unit are movable with respect to one another. One position of the passive unit with respect to the active unit may be defined as default position. When the passive unit is in the default position with respect to the active unit, each reflector segment has, in a region where it reflects light emitted by a specific one of the at least one light source to a specific one of the at least one light sensor and in a cross section going through the specific one of the at least one light source and the specific one of the at least one light sensor, essentially a rounded concave shape. In particular, for each light sensor there may be at least one light source that emits light that, when it is reflected by a reflector segment, is incident on the light sensor, i.e., that hits the light sensor. Said light sensor along with said light source may then be chosen as the specific one of the at least one light sensor and the specific one of the at least one light source, respectively. More particularly, there may be several pairs of such light sensors and light sources. The term "essentially a rounded concave shape" may be understood such that a gross macroscopic shape of the region of the reflector segment is a rounded concave shape. In particular, smaller structures such as surface patterns or surface textures, are to be neglected for the gross macroscopic shape. With a reflector segment that has an essentially rounded concave shape, the optical sensor system may be tolerant to mechanical misalignment of the passive unit with respect to the active unit. Further, with a reflector segment that has an essentially rounded concave shape, a convenient placement, orientation and use of commonly available light sources and light sensors, e.g., with given emission characteristics, on commonly available carriers (e.g., printed circuit boards (PCBs)) is possible. In particular, light sources and light sensors that are parallel to the PCB may be used and odd shapes or a complex placement of the light sources and light sensors may be avoided.

According to an embodiment, the at least one light source and the at least one light sensor are arranged on a surface. Said surface may be a substrate and/or a printed circuit board. Such an arrangement enables a simple production and a low production cost of the active unit. When the at least one light source and the at least one light sensor are arranged on the surface, the cross section that goes through the specific one of the at least one light source and the specific one of the at least one lights sensor may be further perpendicular to the surface.

According to an embodiment, one of the at least one light source and at least two light sensors are arranged such that the light source is in between the light sensors. As an example, two light sensors and one light source may be arranged in a line, such that the light source is in between the two light sensors. As another example, four light sensors may be arranged at corners of a square and the light source may be arranged at the center of said square. These arrangements are particularly simple yet effective for determining a motion of the passive unit with respect to the active unit. If the light source and the light sensors are arranged on a surface, the term "in between" may be understood as at a center in a plan view in a direction perpendicular to the surface.

According to an embodiment, the number of light sensors may be equal to the number of reflector segments and the number of light sources may be one. In this case, each of the reflector segments may be allocated to a light sensor such that a direction from the light source to a center of the reflector segment is essentially the same as a direction from the light source to the respective light sensor, in particular in a plan view in a direction perpendicular to the surface. This is also a very simple yet effective arrangement for determining a motion of the passive unit with respect to the active unit.

According to an embodiment, the passive unit is movable with respect to the active unit in at least one translational motion and/or at least one rotational motion. In particular, several ways of motions are possible, and the number and placement of the light sources and light sensors has to be adapted to the respective motion. As an example, when one light source and two light sensors are arranged on a surface, a translational motion perpendicular to the surface and a rotational motion around an axis that is parallel to the surface and perpendicular to a direction from one of the light sensors to the other one of the light sensors may be simultaneously determined. As another example, when one light source and two light sensors are arranged on a surface, a translational motion perpendicular to the surface and translational motion parallel to the surface, in a direction from one of the light sensors to the other one of the light sensors, may be simultaneously determined. As yet another example, when one light source and four light sensors are arranged on a surface, a translational motion perpendicular to the surface and two rotational motions around axes parallel to the surface may be determined simultaneously, and the fourth measurement may be used for control purposes.

According to an embodiment, the rounded concave shape is a segment of an ellipse. This provides an easy definition of the rounded concave shape and leads to simple relationships between rotations and/or translations and the resulting light intensities measured by the light sensors.

According to an embodiment, when the passive unit is translated and/or rotated with respect to the active unit to a predetermined extreme point, the specific one of the at least one light source and the specific one of the at least one light sensor are at the foci of the ellipse corresponding to the region of the reflector segment where light emitted by the specific one of the at least one light source is reflected to the specific one of the at least one light sensor. That is, due to the shape of the ellipse, the light intensity measured at the specific one of the at least one light sensor will be at a maximum when the passive unit is translated and/or rotated with respect to the active unit to the predetermined extreme point. This enables an easy determination of the translation and/or rotation based on the light sensor readings, more particularly a one-to-one correspondence of sensor readings and translations and/or rotations. In particular, the extreme point may be chosen such that, at least in a normal operation of a device in which the optical sensor system is used, rotations and/or translations of the passive unit with respect to the active unit will not go beyond said extreme point to achieve said one-to-one correspondence. As an example, when there are two light sensors and two reflector segments, the light source and one of the light sensors may be at the foci of the ellipse of one reflector segment when the passive unit is rotated and/or translated to one predetermined extreme point, and the light source and the other one of the light sensors may be at the foci of the ellipse of the other one of the reflector segments when passive unit is rotated and/or translated to another predetermined extreme point.

According to an embodiment, the reflector segments comprise a surface pattern. In particular, a characteristic size of the surface pattern is much smaller than the size of the reflector segment and much greater than a wavelength of light emitted by the at least one light source, more particularly, the characteristic size of the surface pattern is between 50 µm and 1 mm. With such a surface pattern, one may tune between specularity versus diffusivity of the light reflected by the reflector segments. This may yield a smoother transfer-function between rotations and/or translations and the corresponding light sensor readings and may further provide some insensitivity to material-variation during production of the reflector segment as well as to property changes of the reflector segment due to ageing, corrosion, contamination, and/or other forms of degradation. With a highly specular reflector segment, the effect of moving in and out of focus of the ellipse is very pronounced and an effect of a translation perpendicular to the surface is relatively small. This is mediated by the use of a surface pattern. Further, with a highly specular reflector segment, there may be some variability, e.g., based upon the actual specularity of the reflecting surface. This is also mediated by the use of a surface pattern. Moreover, there are several parameters of the surface pattern that can be tuned to achieve the optimal gloss, i.e., specularity or diffusivity: the shape may be chosen from a wide variety of possible shapes, e.g., sinusoid, triangle, trapezoid, and/or the amplitude and/or the pitch may be chosen. The surface pattern may be achieved, e.g., by extrusion-sintering, or by 2.5d extrusion.

According to an embodiment, the surface pattern comprises ribs. These ribs may extend perpendicular to a direction from the specific one of the at least one light source to the specific one of the at least one light sensor in a region of the reflector segment where light emitted by the specific one of the at least one light source is reflected to the specific one of the at least one light sensor. This is particularly easy to manufacture and provides the greatest effect on the transfer function.

According to an embodiment, the reflector segments comprise a surface texture. A characteristic size of the surface texture may be near the order of magnitude of a wavelength of light emitted by the at least one light source, more particularly, between 1 µm and 50 µm. Like the surface pattern, the surface texture affects the specularity versus diffusivity choice, and may make the surface-reflectivity more predictable in spite of a variability of production-steps or property changes of the reflector segment due to ageing, corrosion, contamination, and/or other forms of degradation. The surface textures may be achieved by various processes like sintering, abrasive blasting such as sandblasting, tumbling, laser-texturing, or etching. In particular, the surface texture may be combined with the surface pattern.

Alternatively, or additionally, the reflector surface may be coated with a matte coating, e.g., a flat white paint, or grit. This may also be combined with the surface pattern and/or surface texture.

According to an embodiment, a shape of the at least one reflector segment, an amount of gloss of the at least one reflector segment, a size of the at least one light source and/or a size of the at least one light sensor are chosen such that a sum of light intensities detected by the light sensors depends on translations of the passive unit with respect to the active unit but is mostly indifferent to rotations of the passive unit with respect to the active unit, and differences of light intensities detected by the light sensors depend on rotations of the passive unit with respect to the active unit but are mostly indifferent to translations of the passive unit with respect to the active unit. In particular, when the light sources and light sensors are arranged on a surface, said rotations may be around axes that are parallel to the surface and the translation is in a direction perpendicular to the surface. When the choices are made as indicated above, a transfer-function between the translation and rotations and the intensities measured by the light sensors is particularly easy, allowing a fast and simple determination of the translation and rotations based on the measured light intensities. In the above context, "gloss" refers to an amount of specularity or diffusivity. In particular, "gloss" may indicate the amount and type of reflections of the at least one reflector segment, wherein the type may be specular reflection, spread reflection, diffuse reflection, or any combination of these reflections. Further, the choice of the shape of the at least one reflector segment, the amount of gloss of the at least one reflector segment, the size of the at least one light source and/or the size of the at least one light sensor may be made by experiment or by simulation, e.g., automatically with a regression analysis.

According to an embodiment, the shape of the at least one reflector segment is determined by choosing a semi-minor axis and/or a semi-major axis of the ellipse. Said choice may be made with the constraint that the corresponding light source and light sensor are at the foci of the ellipse when the passive unit is at the predetermined extreme point, leaving only one degree of freedom.

According to an embodiment, the amount of gloss of the at least one reflector segment is determined by choosing the surface pattern and/or the surface texture of the at least one reflector segment. The amount of gloss may further be determined by choosing a coating applied to the reflector surface.

According to an embodiment, the optical sensor system further comprises a controller unit configured to receive sensor readings from the at least one light sensor and determine a pose of the passive unit with respect to the active unit based on said sensor readings. In this context, "pose" refers to the position and orientation. This may be performed using a transfer function between the rotations and/or translations and the corresponding light intensities at the light sensors. Hence, the optical sensor system is a self-contained unit that determines the pose of the passive unit with respect to the active unit.

Alternatively, the sensor readings may be sent to a controller unit of the device that contains the optical sensor system, such that said controller unit of the device may determine the pose of the passive unit with respect to the active unit.

In another aspect of the present invention, a powered oral cleaning device is provided. The powered oral cleaning device may be a powered toothbrush. The powered oral cleaning device comprises a body portion, a brush head extending from the body portion and an optical sensor system according to the above description. At least a portion of the brush head is configured to move relative to the body portion, and the active unit is fixed to the body portion and the passive unit is fixed to the brush head, or the active unit is fixed to the brush head and the passive unit is fixed to the body portion. With such a configuration, the movement of the brush head with respect to the body portion may be determined. A translation of the brush head may correspond to a pressure applied on the brush head (and, hence, on the teeth and/or the gums), and a rotation of the brush head may correspond to the rotating motion that shall clean the teeth. Further, a translational tapping motion, resulting from the rotation of the brush head, may be distinguished from the pressure applied by the user due to its frequency, which is twice the frequency of the brush rotation, and therefore much faster than changes due to the user. The advantages of using said optical sensor system as well as further embodiments are given in the above description.

These and other aspects of the invention will be apparent from and elucidated with reference to the embodiments described hereinafter.

### BRIEF DESCRIPTION OF THE DRAWINGS

In the following, preferred embodiments of the invention will be described, by way of example only, and with reference to the drawings in which:
Figs. 1A and 1B show schematic cross-sections through an embodiment of an optical sensor system;
Fig. 2A shows a schematic cross-section through another embodiment of an optical sensor system;
Fig. 2B shows a plan view of the passive unit of the optical sensor system of Fig. 2A;
Fig. 3 shows a plan view of the passive unit of yet another embodiment of an optical sensor system;
Fig. 4 shows a schematic cross-section through yet another embodiment of an optical sensor system; and
Fig. 5 shows a schematic cross-section through an embodiment of a powered oral cleaning device.

In the figures, elements which correspond to elements already described may have the same reference numerals. Examples, embodiments or optional features, whether indicated as non-limiting or not, are not to be understood as limiting the invention as claimed.

### DETAILED DESCRIPTION OF EMBODIMENTS

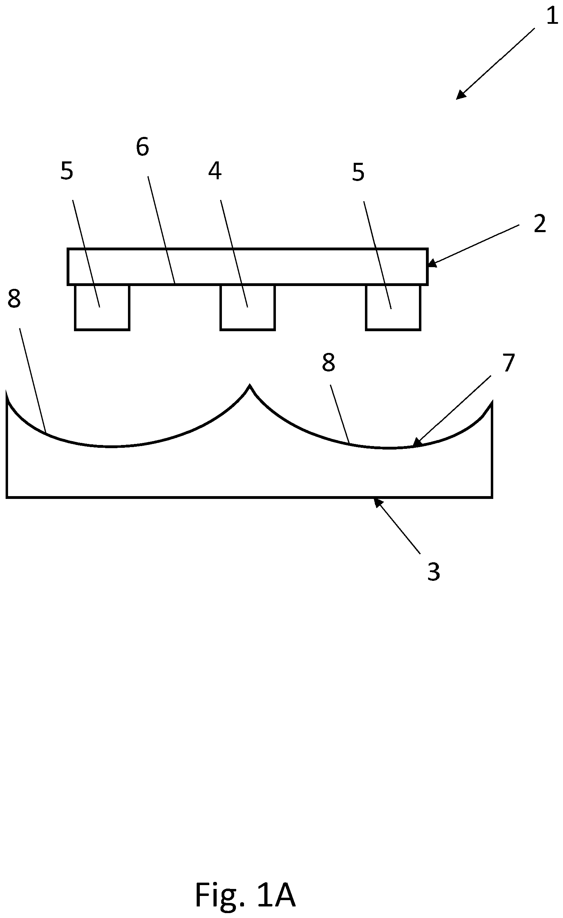

Fig. 1A shows a schematic cross-section through an embodiment of an optical sensor system 1. The optical sensor system 1 comprises an active unit 2 and a passive unit 3, wherein the active unit 2 and the passive unit 3 are movable with respect to one another, e.g., in a rotational and/or translation motion. In Fig. 1A, the passive unit 3 is shown in a default position with respect to the active unit 2.

The active unit 2 comprises one light source 4 and two light sensors 5 arranged on a surface 6, wherein the light source 4 is arranged in between the light sensors 5. Other numbers of light sources 4 and light sensors 5 are also possible, the light sources 4 and light sensors 5 do not necessarily have to be arranged on a surface 6 and a different arrangement of the light sources 4 with respect to the light sensors 5 is also possible. The light source 4 may emit visible light, infrared light, or ultraviolet light. In particular, the light source 4 may be a light-emitting diode (LED). The light sensors 5 may be any kind of light sensors 5 that measure the intensity of light that is incident on the light sensors 5, i.e., that hits the light sensors 5. For example, the light sensors 5 may be photodiodes, CMOS sensors or CCD sensors.

The passive unit 3 has a reflector 7 with two reflector segments 8. Other numbers of reflector segments 8 are also possible. One of the reflector segments 8 is arranged such that light emitted by the light source 4 hits one of the light sensors 5 and the other one of the reflector segments 8 is arranged such that light emitted by the light source 4 hits the other one of the light sensors 5.

Each of the reflector segments 8 has, in a region where it reflects light emitted by the light source 4 to the corresponding light sensor 5 and in a cross section going through the light source 4 and the light sensor 5, essentially a rounded concave shape. The term "essentially a rounded concave shape" may be understood such that a gross macroscopic shape of the region of the reflector segment 8 is a rounded concave shape. In particular, smaller structures such as surface patterns or surface textures, are to be neglected for the gross macroscopic shape. In particular, the essentially rounded concave shape is a segment of an ellipse.

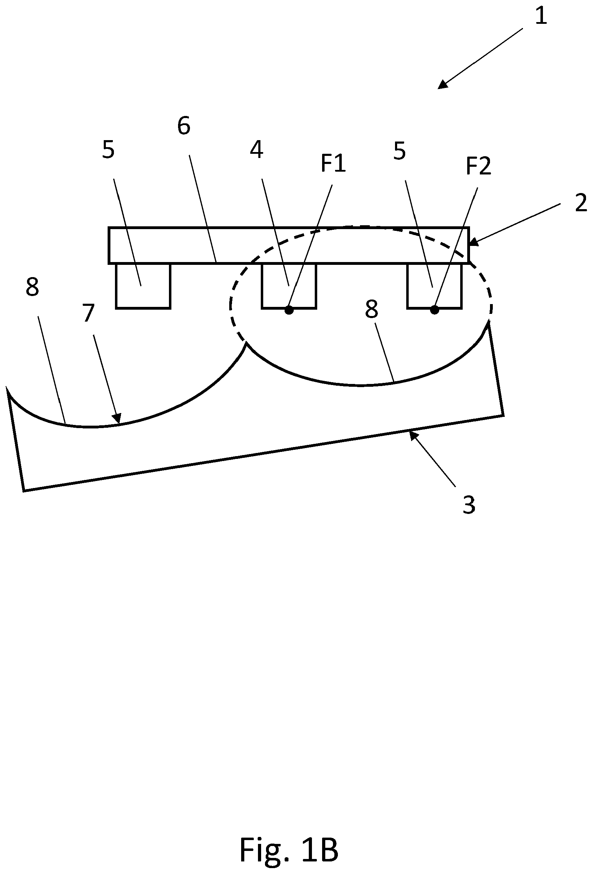

When the passive unit 3 is rotated with respect to the active unit 2 to a predetermined extreme point, the light source 4 and the corresponding light sensor 5 are at the foci F1 and F2 of the corresponding ellipse, as shown in Fig. 1B.

The optical sensor system 1 of Figs. 1A and 1B is tolerant to mechanical misalignment of the passive unit 3 with respect to the active unit 2. Further, a convenient placement, orientation and use of commonly available light sources 4 and light sensors 5, e.g., with given emission characteristics, on commonly available carriers (e.g., printed circuit boards (PCBs)) is possible. In particular, light sources 4 and light sensors 5 that are parallel to surface (such as the PCB) may be used and odd shapes or a complex placement of the light sources 4 and light sensors 5 may be avoided.

With the optical sensor system 1 of Figs. 1A and 1B, a translation of the passive unit 3 in a direction perpendicular to the surface 6 and a rotation of the passive unit 3 around an axis perpendicular to the paper plane may be determined simultaneously. In particular, the shape of the reflector segments 8, an amount of gloss of the reflector segments 8, a size of the light source 4 and/or a size of the light sensors 5 may be chosen such that a sum of light intensities detected by the light sensors 5 depends on the translations of the passive unit 3 with respect to the active unit 2 but is mostly indifferent to the rotation of the passive unit 3 with respect to the active unit 2, and a difference of light intensities detected by the light sensors 5 depends on the rotation of the passive unit 3 with respect to the active unit 3 but is mostly indifferent to the translation of the passive unit 3 with respect to the active unit 2.

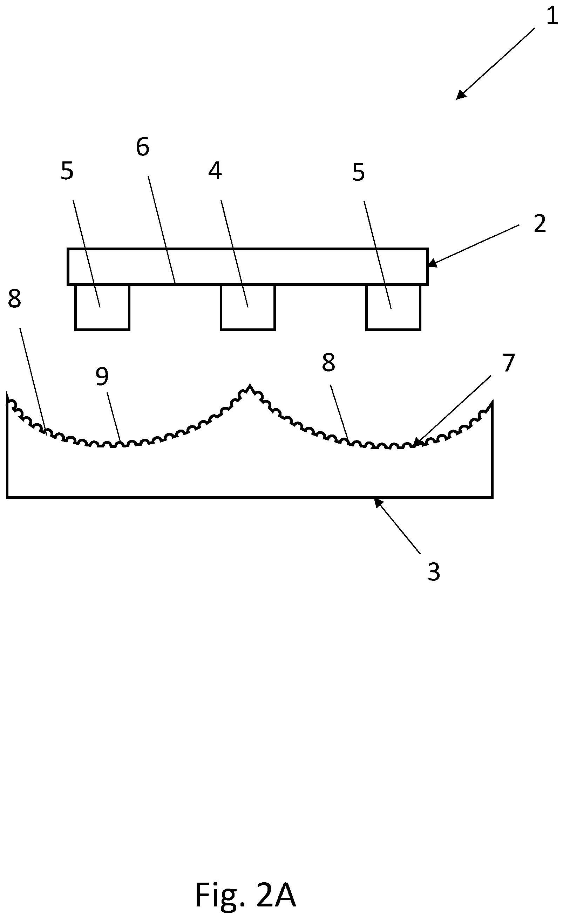

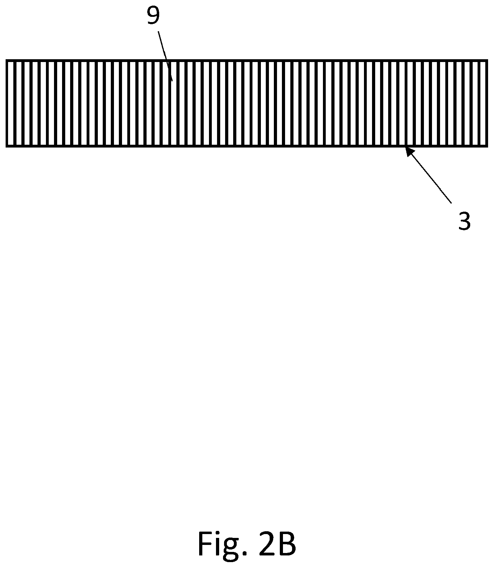

Fig. 2A shows a schematic cross-section through another embodiment of an optical sensor system 1, and a plan view of the passive unit 3 of this embodiment of the optical sensor system 1 is shown in Fig. 2B. In this embodiment, the reflector segments 8 comprise a surface pattern 9. A characteristic size of the surface pattern 9 may be much smaller than the size of the reflector segment 8 and much greater than a wavelength of light emitted by the light source 4, more particularly, the characteristic size of the surface pattern 9 may be between 50 µm and 1 mm. With such a surface pattern 9, one may tune between specularity versus diffusivity of the light reflected by the reflector segments 8. In particular, the surface pattern 9 has an impact on a gloss of the reflector segments 8, wherein "gloss" may indicate the amount and type of reflections of the at least one reflector segment, wherein the type may be specular reflection, spread reflection, diffuse reflection, or any combination of these reflections. This may yield a smoother transfer-function between rotations and/or translations and the corresponding light sensor readings and may further provide some insensitivity to material-variation during production of the reflector segment 8 as well as to property changes of the reflector segment 8 due to ageing, corrosion, contamination, and/or other forms of degradation. With a highly specular reflector segment 8, the effect of moving in and out of focus of the ellipse is very pronounced and an effect of a translation perpendicular to the surface 6 is relatively small. This is mediated by the use of a surface pattern 9. Further, with a highly specular reflector segment 8, there may be some variability, e.g., based upon the actual specularity of the reflecting surface. This is also mediated by the use of a surface pattern 9. Moreover, there are several parameters of the surface pattern 9 that can be tuned to achieve the optimal gloss, i.e., specularity or diffusivity: the shape may be chosen from a wide variety of possible shapes, e.g., sinusoid, triangle, trapezoid, and/or the amplitude and/or the pitch may be chosen. The surface pattern 9 may be achieved, e.g., by extrusion-sintering, or by 2.5d extrusion.

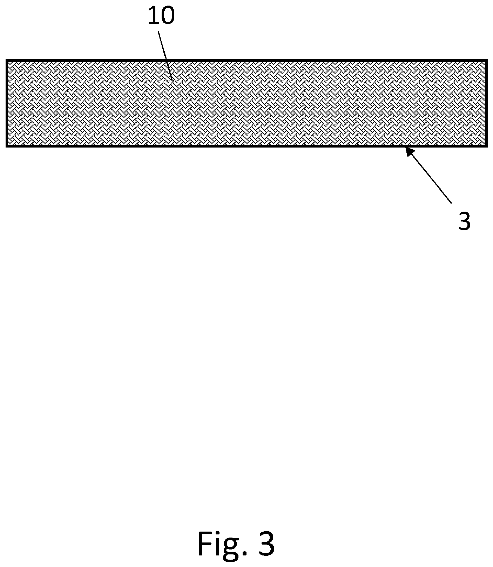

Fig. 3 shows a plan view of the passive unit 3 of yet another embodiment of an optical sensor system 1. In this embodiment, the reflector segments 8 comprise a surface texture 10. A characteristic size of the surface texture 10 may be near the order of magnitude of a wavelength of light emitted by the light source 5, more particularly, between 1 µm and 50 µm. Like the surface pattern 9, the surface texture 10 affects the specularity versus diffusivity choice, i.e., the gloss, and may make the surface-reflectivity more predictable in spite of a variability of production-steps or property changes of the reflector segments 8 due to ageing, corrosion, contamination, and/or other forms of degradation. The surface textures 10 may be achieved by various processes like sintering, abrasive blasting such as sandblasting, tumbling, laser-texturing, or etching. In particular, the surface texture 10 may be combined with the surface pattern 9.

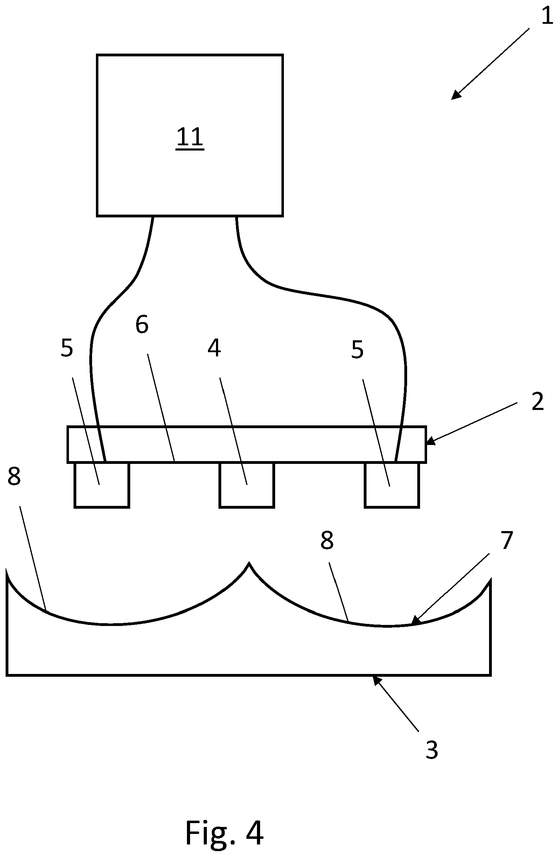

Fig. 4 shows a schematic cross-section through yet another embodiment of an optical sensor system 1. In this embodiment, the optical sensor system 1 further comprises a controller unit 11 that is connected to the light sensors 5 and configured to receive sensor readings from the light sensors 5 and determine a pose of the passive unit 3 with respect to the active unit 2 based on said sensor readings. This optical sensor system 1 is a self-contained unit that determines the pose of the passive unit 3 with respect to the active unit 2. Alternatively, the sensor readings may be sent to a controller unit of a device that contains the optical sensor system 1, such that said controller unit of the device may determine the pose of the passive unit 3 with respect to the active unit 2.

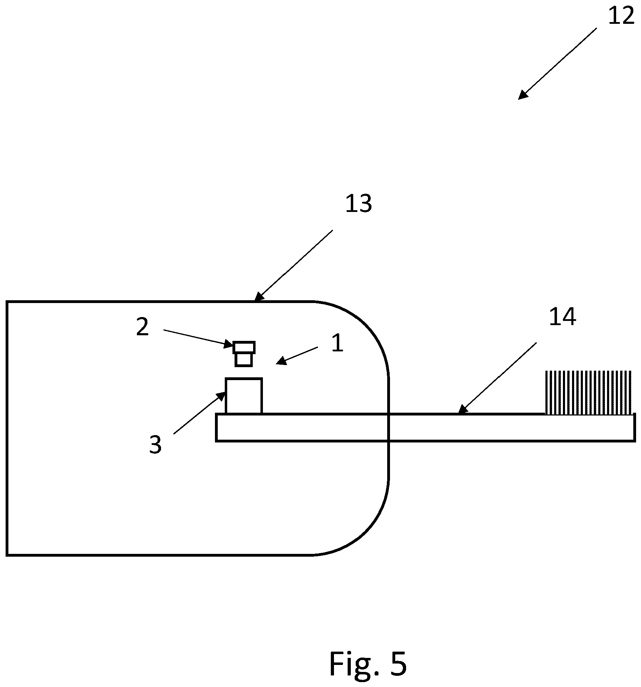

Fig. 5 shows a schematic cross-section through a powered toothbrush as an example for a powered oral cleaning device 12. The powered toothbrush comprises a body portion 13, a brush head 14 and the optical sensor system 1. The brush head 14 extends from the body portion 13 and at least a portion of the brush head 14 is configured to move relative to the body portion 13. The active unit 2 of the optical sensor system 1 is fixed to the body portion 13 and the passive unit 3 is fixed to the brush head 14. Alternatively, the active unit 2 may be fixed to the brush head 14 and the passive unit 3 may be fixed to the body portion 13. The optical sensor system 1 measures a translation of the brush head 14, which may be a measure for the pressure applied to the brush head 14, and a rotation of the brush head 14, which may indicate whether or not the rotation of the brush head 14 works flawlessly.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

### LIST OF REFERENCE SIGNS:

- 1: optical sensor system
- 2: active unit
- 3: passive unit
- 4: light source
- 5: light sensor
- 6: surface
- 7: reflector
- 8: reflector segment
- 9: surface pattern
- 10: surface texture
- 11: controller unit
- 12: powered oral cleaning device
- 13: body portion
- 14: brush head

- F1, F2: focal points

## Claims

1. An optical sensor system (1), comprising:
an active unit (2) with at least one light source (4) and at least one light sensor (5); and
a passive unit (3) with a reflector (7) comprising at least one reflector segment (8),
wherein the active unit (2) and the passive unit (3) are movable with respect to one another, and when the passive unit (3) is in a default position with respect to the active unit (2):
each of the reflector segments (8) has, in a region where it reflects light emitted by a specific one of the at least one light source (4) to a specific one of the at least one light sensor (5) and in a cross section going through the specific one of the at least one light source (4) and the specific one of the at least one light sensor (5), essentially a rounded concave shape.

2. The optical sensor system (1) according to claim 1, wherein the at least one light source (4) and the at least one light sensor (5) are arranged on a surface (6).

3. The optical sensor system (1) according to claim 1 or 2, wherein one of the at least one light source (4) and at least two light sensors (5) are arranged such that the light source (4) is in between the light sensors (5).

4. The optical sensor system (1) according to any one of claims 1 to 3, wherein the passive unit (3) is movable with respect to the active unit (2) in at least one translational motion and/or at least one rotational motion.

5. The optical sensor system (1) according to any one of claims 1 to 4, wherein the rounded concave shape is a segment of an ellipse.

6. The optical sensor system (1) according to claim 5, wherein, when the passive unit (3) is translated and/or rotated with respect to the active unit (2) to a predetermined extreme point, the specific one of the at least one light source (4) and the specific one of the at least one light sensor (5) are at the foci of the ellipse corresponding to the region of the reflector segment (8) where light emitted by the specific one of the at least one light source (4) is reflected to the specific one of the at least one light sensor (5).

7. The optical sensor system (1) according to any one of claims 1 to 6, wherein the reflector segments (8) comprise a surface pattern (9), wherein, particularly, a characteristic size of the surface pattern (9) is much smaller than the size of the reflector segment (8) and much greater than a wavelength of light emitted by the at least one light source (4), more particularly, the characteristic size of the surface pattern (9) is between 50 µm and 1 mm.

8. The optical sensor system (1) according to claim 7, wherein the surface pattern (9) comprises ribs, particularly extending perpendicular to a direction from the specific one of the at least one light source (4) to the specific one of the at least one light sensor (5) in a region of the reflector segment (8) where light emitted by the specific one of the at least one light source (4) is reflected to the specific one of the at least one light sensor (5).

9. The optical sensor system (1) according to any one of claims 1 to 8, wherein the reflector segments (8) comprise a surface texture (10), wherein, particularly, a characteristic size of the surface texture (10) is near the order of magnitude of a wavelength of light emitted by the at least one light source (4), more particularly, between 1 µm and 50 µm.

10. The optical sensor system (1) according to any one of claims 1 to 9, wherein a shape of the at least one reflector segment (8), an amount of gloss of the at least one reflector segment (8), a size of the at least one light source (4) and/or a size of the at least one light sensor (5) are chosen such that
a sum of light intensities detected by the light sensors (5) depends on translations of the passive unit (3) with respect to the active unit (2) but is mostly indifferent to rotations of the passive unit (3) with respect to the active unit (2), and
differences of light intensities detected by the light sensors (5) depend on rotations of the passive unit (3) with respect to the active unit (2) but are mostly indifferent to translations of the passive unit (3) with respect to the active unit (2).

11. The optical sensor system (1) according to claim 10, wherein the shape of the at least one reflector segment (8) is determined by choosing a semi-minor axis and/or a semi-major axis of the ellipse.

12. The optical sensor system (1) according to claim 10 or 11, wherein the amount of gloss of the at least one reflector segment (8) is determined by choosing the surface pattern (9) and/or the surface texture (10) of the at least one reflector segment (8).

13. The optical sensor system (1) according to any one of claims 1 to 12, further comprising a controller unit (11) configured to receive sensor readings from the at least one light sensor (5) and determine a pose of the passive unit (3) with respect to the active unit (2) based on said sensor readings.

14. A powered oral cleaning device (12) comprising
a body portion (13);
a brush head (14) extending from the body portion (13), wherein at least a portion of the brush head (14) is configured to move relative to the body portion (13); and
an optical sensor system (1) according to any one of claims 1 to 13, wherein the active unit (2) is fixed to the body portion (13) and the passive unit (3) is fixed to the brush head (14), or wherein the active unit (2) is fixed to the brush head (14) and the passive unit (3) is fixed to the body portion (13).
